(19) Europäisches Patentamt
European Patent Office
Office européen des brevets

(11) EP 3 858 904 A1

(12) **EUROPEAN PATENT APPLICATION**
published in accordance with Art. 153(4) EPC

(43) Date of publication:
**04.08.2021 Bulletin 2021/31**

(21) Application number: **19865760.3**

(22) Date of filing: **25.09.2019**

(51) Int Cl.:
***C08J 9/04*** *(2006.01)*
***B29C 44/00*** *(2006.01)*
***B29C 51/08*** *(2006.01)*
***B65D 1/00*** *(2006.01)*
***C08L 67/00*** *(2006.01)*
***C08L 101/00*** *(2006.01)*

(86) International application number:
**PCT/JP2019/037594**

(87) International publication number:
**WO 2020/067154 (02.04.2020 Gazette 2020/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.09.2018 JP 2018182069**
**28.02.2019 JP 2019036356**

(71) Applicant: **SEKISUI PLASTICS CO., LTD.**
**Osaka-shi**
**Osaka 530-8565 (JP)**

(72) Inventor: **KATO Osamu**
**Osaka-shi, Osaka 530-8565 (JP)**

(74) Representative: **Hoffmann Eitle**
**Patent- und Rechtsanwälte PartmbB**
**Arabellastraße 30**
**81925 München (DE)**

# (54) THERMOPLASTIC POLYESTER RESIN FOAM SHEET, THERMOPLASTIC POLYESTER RESIN FOAM CONTAINER, METHOD FOR PRODUCING THERMOPLASTIC POLYESTER RESIN FOAM SHEET, AND METHOD FOR PRODUCING THERMOPLASTIC POLYESTER RESIN FOAM CONTAINER

(57) A thermoplastic polyester resin foam sheet includes a foam layer containing a thermoplastic polyester resin, in which a number average molecular weight Mn of the thermoplastic polyester resin is 9,000 to 26,000, a Z-average molecular weight Mz is 240,000 to 710,000, and a content of acetaldehyde in the foam layer is 25 ppm by mass or less.

FIG. 5

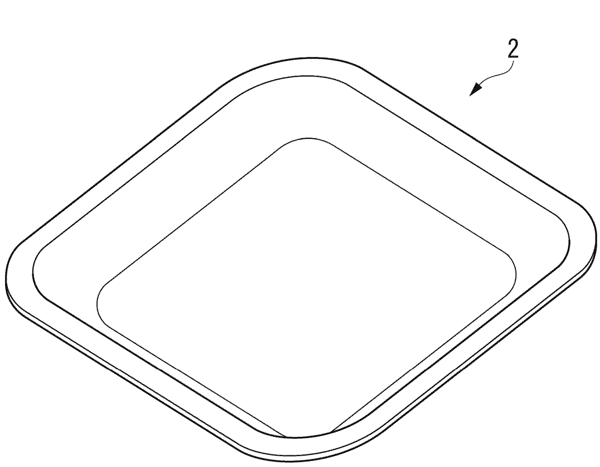


EP 3 858 904 A1

## Description

[Technical Field]

The present invention relates to a thermoplastic polyester resin foam sheet, a thermoplastic polyester resin foam container, a method for producing a thermoplastic polyester resin foam sheet, and a method for producing a thermoplastic polyester resin foam container.

Priority is claimed on Japanese Patent Application No. 2018-182069, filed September 27, 2018, and Japanese Patent Application No. 2019-036356, filed February 28, 2019, the contents of which are incorporated herein by reference.

[Background Art]

It is generally known that a container obtained by molding a thermoplastic polyester resin foam sheet has excellent heat resistance. Accordingly, containers that are molded products of thermoplastic polyester resin foam sheets are widely used as containers for foods heat-processed in a microwave oven or oven.

As a method of molding a container, a method in which a thermoplastic polyester resin foam sheet is heated to a temperature at which it is moldable, and thereafter, a foam sheet is sandwiched between dies each having a predetermined shape to perform molding.

For example, Patent Document 1 discloses a thermoplastic polyester resin foam sheet in which a degree of crystallinity is 20% or less and a molecular orientation ratio is 4.5 or less. Patent Document 1 intends to improve heat insulating properties of the thermoplastic polyester resin foam sheet disclosed in Patent Document 1 and facilitate molding of a container.

[Citation List]

[Patent Document]

[Patent Document 1]
Japanese Unexamined Patent Application, First Publication No. H02-265725

[Summary of Invention]

[Technical Problem]

Meanwhile, a thermoplastic polyester resin foam sheet and a molded product thereof may release a peculiar fruit-like odor. When a peculiar odor is generated from the thermoplastic polyester resin foam sheet and the molded product thereof, it may not be preferable depending on usage applications.

Accordingly, an object of the present invention is to provide a thermoplastic polyester resin foam sheet in which generation of a peculiar odor can be inhibited.

[Solution to Problem]

As a result of diligent studies, the inventors of the present invention have found that a fruit-like odor of a thermoplastic polyester resin foam sheet is caused by acetaldehyde. Acetaldehyde is generated by degradation of polyester. Acetaldehyde is a compound used as a fragrance ingredient in food products, but an odor of acetaldehyde is not desirable depending on contents. The inventors of the present invention were able to reduce a content of acetaldehyde by controlling an average molecular weight of a thermoplastic polyester resin in a foam layer, and thereby the invention of the present application has been completed.

The present invention has the following aspects.

[1] A thermoplastic polyester resin foam sheet including:

a foam layer containing a thermoplastic polyester resin,
in which a number average molecular weight Mn of the thermoplastic polyester resin contained in the foam layer is 9,000 to 26,000,
a Z-average molecular weight Mz of the thermoplastic polyester resin contained in the foam layer is 240,000 to 710,000, and
a content of acetaldehyde in the foam layer is 25 ppm by mass or less.

[2] The thermoplastic polyester resin foam sheet according to [1], in which a ratio represented by Mz/Mn is 8.0 to 36.0.
[3] The thermoplastic polyester resin foam sheet according to [1] or [2], in which a content of ashes in the foam layer is 5.0 mass% or less.
[4] The thermoplastic polyester resin foam sheet according to any one of [1] to [3], in which a content of heavy metals in the foam layer is 1,000 ppm by mass or less.
[5] The thermoplastic polyester resin foam sheet according to any one of [1] to [4], in which the thermoplastic polyester resin contained in the foam layer includes a plant-derived thermoplastic polyester resin.
[6] The thermoplastic polyester resin foam sheet according to any one of [1] to [5], in which an amount of a gel in the thermoplastic polyester resin contained in the foam layer is 0.5% to 12.0% by weight.
[7] A thermoplastic polyester resin foam container including:

a foam layer containing a thermoplastic polyester resin,
in which a number average molecular weight Mn of the thermoplastic polyester resin contained in the foam layer is 9,000 to 26,000,
a Z-average molecular weight Mz of the thermoplastic polyester resin contained in the foam layer is 240,000 to 710,000, and
a content of acetaldehyde in the foam layer is 25 ppm by mass or less.

[8] The thermoplastic polyester resin foam container according to [7], in which a ratio represented by Mz/Mn is 8.0 to 36.0.
[9] The thermoplastic polyester resin foam container according to [7] or [8], in which a content of ashes in the foam layer is 5.0 mass% or less.
[10] The thermoplastic polyester resin foam container according to any one of [7] to [9], in which a content of heavy metals in the foam layer is 1,000 ppm by mass or less.
[11] The thermoplastic polyester resin foam container according to any one of [7] to [10], in which the thermoplastic polyester resin contained in the foam layer includes a plant-derived thermoplastic polyester resin.
[12] The thermoplastic polyester resin foam container according to any one of [7] to [11], in which an amount of a gel in the thermoplastic polyester resin contained in the foam layer is 0.5% to 12.0% by weight.
[13] The thermoplastic polyester resin foam container according to any one of [7] to [12], which is a food container.
[14] A method for producing the thermoplastic polyester resin foam sheet according to any one of [1] to [6], the method including:

a step of kneading a crude thermoplastic polyester resin and a foaming agent to obtain a kneaded product; and
a step of extruding and foaming the kneaded product to form the foam layer.

[15] The method for producing the thermoplastic polyester resin foam sheet according to [14], in which, in the step in which the kneaded product is obtained, the crude thermoplastic polyester resin, the foaming agent, and a crosslinking agent are kneaded to obtain the kneaded product.
[16] A method for producing a thermoplastic polyester resin foam container, the method including a step of molding the thermoplastic polyester resin foam sheet according to any one of [1] to [6] to obtain a container.

The present invention has the following aspects.

[1] A thermoplastic polyester resin foam sheet including:

a foam layer containing a thermoplastic polyester resin,
in which a number average molecular weight Mn of the thermoplastic polyester resin contained in the foam layer is 9,000 to 26,000, is preferably 15,000 to 26,000, and is more preferably 20,000 to 25,000,
a Z-average molecular weight Mz of the thermoplastic polyester resin contained in the foam layer is 240,000 to 710,000, is preferably 270,000 to 710,000, and is more preferably 300,000 to 650,000, and
a content of acetaldehyde in the foam layer is 25 ppm by mass or less, is preferably 0.5 to 25 ppm by mass, is more preferably 1 to 20 ppm by mass, and is even more preferably 2 to 15 ppm by mass.

[2] The thermoplastic polyester resin foam sheet according to [1], in which a ratio represented by Mz/Mn is preferably 8.0 to 36.0, is more preferably 12 to 36, and is even more preferably 15 to 30.
[3] The thermoplastic polyester resin foam sheet according to [1] or [2], in which a content of ashes in the foam layer is preferably 5.0 mass% or less, is more preferably 0.1 to 5.0 mass%, is even more preferably 0.2 to 3.0 mass%, and is particularly preferably 0.3 to 2.0 mass%.

[4] The thermoplastic polyester resin foam sheet according to any one of [1] to [3], in which a content of heavy metals in the foam layer is preferably 1,000 ppm by mass or less, is more preferably 10 to 1,000 ppm by mass, is even more preferably 20 to 700 ppm by mass, and is particularly preferably 30 to 500 ppm by mass.
[5] The thermoplastic polyester resin foam sheet according to any one of [1] to [4], in which the thermoplastic polyester resin contained in the foam layer includes a plant-derived thermoplastic polyester resin.
[6] The thermoplastic polyester resin foam sheet according to any one of [1] to [5], in which an amount of a gel in the thermoplastic polyester resin contained in the foam layer is preferably 0.5% to 12.0% by weight, is more preferably 1.5% to 11% by weight, and is even more preferably 1% to 9% by weight.
[7] The thermoplastic polyester resin foam sheet according to any one of [1] to [6], in which a foam multiplicity of the foam layer is preferably 1.5 to 15 times, is more preferably 2 to 10 times, and is even more preferably 2 to 8 times.
[8] A thermoplastic polyester resin foam container including:

a foam layer containing a thermoplastic polyester resin,
in which a number average molecular weight Mn of the thermoplastic polyester resin contained in the foam layer is 9,000 to 26,000, is preferably 15,000 to 26,000, and is more preferably 20,000 to 25,000,
a Z-average molecular weight Mz of the thermoplastic polyester resin contained in the foam layer is 240,000 to 710,000, is preferably 270,000 to 710,000, and is more preferably 300,000 to 650,000, and
a content of acetaldehyde in the foam layer is 25 ppm by mass or less, is preferably 0.5 to 25 ppm by mass, is more preferably 1 to 20 ppm by mass, and is even more preferably 2 to 15 ppm by mass.

[9] The thermoplastic polyester resin foam container according to [8], in which a ratio represented by Mz/Mn is preferably 8.0 to 36.0, is more preferably 12 to 36, and is even more preferably 15 to 30.
[10] The thermoplastic polyester resin foam container according to [8] or [9], in which a content of ashes in the foam layer is preferably 5.0 mass% or less, is more preferably 0.1 to 5.0 mass%, is even more preferably 0.2 to 3.0 mass%, and is particularly preferably 0.3 to 2.0 mass%.
[11] The thermoplastic polyester resin foam container according to any one of [8] to [10], in which a content of heavy metals in the foam layer is preferably 1,000 ppm by mass or less, is more preferably 10 to 1,000 ppm by mass, is even more preferably 20 to 700 ppm by mass, and is particularly preferably 30 to 500 ppm by mass.
[12] The thermoplastic polyester resin foam container according to any one of [8] to [11], in which the thermoplastic polyester resin contained in the foam layer includes a plant-derived thermoplastic polyester resin.
[13] The thermoplastic polyester resin foam container according to any one of [8] to [12], in which an amount of a gel in the thermoplastic polyester resin contained in the foam layer is preferably 0.5% to 12.0% by weight, is more preferably 1.5% to 11% by weight, and is even more preferably 1% to 9% by weight.
[14] The thermoplastic polyester resin foam container according to any one of [8] to [13], which is a food container.
[15] A method for producing the thermoplastic polyester resin foam sheet according to any one of [1] to [7], the method including:

a step of kneading a crude thermoplastic polyester resin and a foaming agent to obtain a kneaded product; and
a step of extruding and foaming the kneaded product to form the foam layer.

[16] The method for producing the thermoplastic polyester resin foam sheet according to [15], in which, in the step in which the kneaded product is obtained, the crude thermoplastic polyester resin, the foaming agent, and a crosslinking agent are kneaded to obtain the kneaded product.
[17] The method for producing the thermoplastic polyester resin foam sheet according to [15], in which, in the step in which the kneaded product is obtained, a crosslinking agent is added into the crude thermoplastic polyester resin, thereafter, the foaming agent is added thereinto, and the mixture is kneaded to obtain the kneaded product.
[18] The method for producing the thermoplastic polyester resin foam sheet according to [15], in which, in the step in which the kneaded product is obtained, a crosslinking agent is added into the crude thermoplastic polyester resin, the mixture is heated and crosslinked to obtain a thermoplastic polyester resin, thereafter, the foaming agent is added into the thermoplastic polyester resin, and the mixture is kneaded to obtain the kneaded product.
[19] The method for producing the thermoplastic polyester resin foam sheet according to [15], in which, in the step in which the kneaded product is obtained, a mixture containing the crude thermoplastic polyester resin, the foaming agent, and a crosslinking agent is kneaded to obtain the kneaded product.
[20] The method for producing the thermoplastic polyester resin foam sheet according to any one of [15] to [19], in which an intrinsic viscosity (IV value) of the crude thermoplastic polyester resin is preferably 0.50 to 1.50, and is more preferably 0.80 to 1.10.
[21] The method for producing the thermoplastic polyester resin foam sheet according to any one of [15] to [20], in which the crosslinking agent is at least one selected from the group consisting of an acid dianhydride such as a

pyromellitic anhydride, a polyfunctional epoxy compound, an oxazoline compound, and an oxazine compound.
[22] The method for producing the thermoplastic polyester resin foam sheet according to any one of [15] to [21], in which an amount of the crosslinking agent used with respect to 100 parts by mass of the crude polyester resin is preferably 0.08 to 0.5 parts by mass, is more preferably 0.12 to 0.45 parts by mass, and is even more preferably 0.15 to 0.4 parts by mass.
[23] A method for producing a thermoplastic polyester resin foam container, the method including a step of molding the thermoplastic polyester resin foam sheet according to any one of [1] to [7] to obtain a container.

[Advantageous Effects of Invention]

According to a thermoplastic polyester resin foam sheet of the present invention, generation of a peculiar odor can be inhibited.

[Brief Description of Drawings]

Fig. 1 is a cross-sectional view showing an example of a foam sheet of the present invention.
Fig. 2 is a flow chart showing an example of a step of producing a plant-derived thermoplastic polyester resin.
Fig. 3 is a flow chart showing another example of a step of producing a plant-derived thermoplastic polyester resin.
Fig. 4 is a flow chart showing still another example of a step of producing a plant-derived thermoplastic polyester resin.
Fig. 5 is a perspective view showing an example of a molded product of the foam sheet of the present invention.

[Description of Embodiments]

(Thermoplastic polyester resin foam sheet)

A thermoplastic polyester resin foam sheet of the present invention (hereinafter, may be referred to as a "foam sheet") includes a foam layer containing a thermoplastic polyester resin (hereinafter, may be referred to as a "polyester resin").
The foam sheet may have a single-layer structure consisting of only the foam layer. Alternatively, the foam sheet may have a multi-layer structure in which a non-foam layer is provided on one surface or both surfaces of the foam layer (hereinafter, also referred to as a "laminate foam sheet"). For example, a laminate foam sheet 1 in Fig. 1 includes a foam layer 10, and a non-foam layer 20 provided on one surface of the foam layer 10. The laminate foam sheet 1 in Fig. 1 has a two-layer structure.
A thickness of the foam sheet is preferably 0.3 to 5.3 mm.

[Foam layer]

A thickness of the foam layer is preferably 0.3 to 5.0 mm, is more preferably 0.4 to 4.5 mm, and is even more preferably 0.5 to 4.0 mm. When a thickness is equal to or more than the above lower limit value, it is possible to further increase the strength of a thermoplastic polyester resin foam container to be described later (hereinafter, sometimes referred to as a "foam container"). When a thickness is equal to or less than the above upper limit value, it is easy to sufficiently heat the inside of the foam sheet when molding the container.
A thickness is a value obtained by the following method. A thickness of arbitrary ten points in a TD direction (width direction) of the foam layer is measured with a microgauge. The measured values of the ten points are averaged to obtain a thickness of the foam layer.
A ratio represented by [thickness of foam layer]/[thickness of foam sheet] is preferably 0.5 to 1.0, and is more preferably 0.7 to 1.0. When a ratio is equal to or more than the above lower limit value, it is possible to further increase the strength of the foam container. When a thickness is equal to or less than the above upper limit value, it is easy to sufficiently heat the inside of the foam sheet when molding the container.
A basis weight of the foam layer is preferably 250 to 900 g/$m^2$, is more preferably 250 to 800 g/$m^2$, and is even more preferably 300 to 700g/$m^2$. When a basis weight is equal to or more than the above lower limit value, it is possible to further increase the strength of the foam container. When a basis weight is equal to or less than the above upper limit value, the foam container is molded more easily.
A foam multiplicity of the foam layer is preferably 1.5 to 15 times, is more preferably 2 to 10 times, and is even more preferably 2 to 8 times. When a foam multiplicity is equal to or more than the above lower limit value, it is possible to further improve heat insulating properties of the foam container. When a foam multiplicity is equal to or less than the

above upper limit value, it is easy to sufficiently heat the inside of the foam sheet when molding the container. The "foam multiplicity of the foam layer" is a value obtained by dividing 1 by an "apparent density of the foam layer."

An apparent density of the foam layer is preferably 0.06 to 0.67 g/$cm^3$, is more preferably 0.10 to 0.50 g/$cm^3$, and is even more preferably 0.12 to 0.50 g/$cm^3$. When an apparent density is equal to or more than the above lower limit value, it is possible to further improve heat insulating properties of the foam container. When an apparent density is equal to or less than the above upper limit value, it is easy to sufficiently heat the inside of the foam sheet when molding the container.

For an apparent density of the foam layer, a dimension of the obtained foam layer is measured to obtain a volume V ($cm^3$), and a density is obtained from the measured mass W (g) and volume by the following formula.

$$\text{Apparent density (g/cm}^3\text{) = mass W (g) of measurement sample/volume V (cm}^3\text{) of measurement sample}$$

An average cell size of the foam layer is preferably, for example, 80 to 450 μm. An average cell size of the foam layer is a value measured according to a method described in ASTM D2842-69.

A volume percentage of closed cells of the foam layer is preferably 50% or more, is more preferably 60% or more, is even more preferably 70% or more, and is particularly preferably 80% or more, and it may be 90% or more. A volume percentage of closed cells of the foam layer is a value measured by a method described in "Rigid Cellular Plastics - Determination Of The Volume Percentage Of Open Cells And Of Closed Cells" of JIS K 7138:2006.

<Polyester resin>

Examples of polyester resins include a polyethylene terephthalate (PET) resin, a polybutylene terephthalate resin, a polyethylene naphthalate resin, a polyethylene furanoate (PEF) resin, a polybutylene naphthalate resin, a polytrimethylene terephthalate (PTT) resin, a copolymer of terephthalic acid, ethylene glycol, and cyclohexanedimethanol, a mixture of these resins, and a mixture of these resins with other resins. Furthermore, a plant-derived polyethylene terephthalate resin, a plant-derived polyethylene furanoate resin, and a plant-derived polytrimethylene terephthalate resin may be used. For these polyester resins, one kind may be used alone, or two or more kinds may be used in combination. A particularly preferred polyester resin is a polyethylene terephthalate resin.

The polyester resin may be a plant-derived polyester resin such as so-called bio-PET.

The plant-derived polyester resin is a polymer derived from a plant raw material such as sugar cane and corn. When the phrase "derived from a plant raw material" is referred to, it includes a polymer synthesized or extracted from a plant raw material. Furthermore, for example, when the phrase "derived from a plant raw material" is referred to, it includes a polymer obtained by polymerizing a monomer synthesized or extracted from a plant raw material. The "monomer synthesized or extracted from a plant raw material" includes a monomer synthesized from a compound synthesized or extracted from a plant raw material as a raw material. The plant-derived polyester resin includes a resin in which a part of monomer is "derived from a plant raw material."

The plant-derived polyester resin will be described with PET and PEF as examples.

A synthesis reaction for PET is shown in Formula (1). PET is synthesized by a dehydration reaction of n moles of ethylene glycol and n moles of terephthalic acid (benzene-1,4-dicarboxylic acid). A stoichiometric mass ratio in this synthesis reaction is ethylene glycol:terephthalic acid = 30:70 (mass ratio). Both terminals of a main chain of PET are hydrogen atoms.

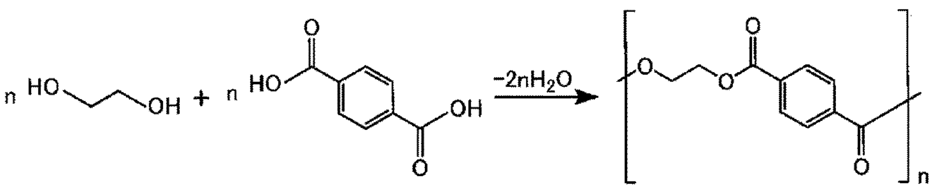


…(1)

[In Formula (1), n is a stoichiometric coefficient, which is a number between 250 and 1,100.]

Ethylene glycol is industrially produced by oxidizing and hydrating ethylene. In addition, terephthalic acid is

industrially produced by oxidizing paraxylene.

As shown in Fig. 2, when ethylene is obtained by a dehydration reaction of a plant-derived ethanol (bioethanol), and PET is synthesized from ethylene glycol synthesized from this ethylene (ethylene glycol derived from bioethanol), and terephthalic acid derived from petrochemicals, PET produced is PET of which 30 mass% is derived from a plant.

Furthermore, as shown in Fig. 3, when paraxylene is obtained by a dehydration reaction of a plant-derived isobutanol (bioisobutanol), and PET is synthesized from terephthalic acid synthesized from this paraxylene, and ethylene glycol derived from bioethanol, PET produced is PET of which 100 mass% is derived from a plant.

A synthesis reaction for PEF is shown in Formula (2). PEF is synthesized by a dehydration reaction of n moles of ethylene glycol and n moles of furandicarboxylic acid (2,5-furandicarboxylic acid). A stoichiometric mass ratio in this synthesis reaction is ethylene glycol:furandicarboxylic acid = 33:66 (mass ratio). Both terminals of a main chain of PEF are hydrogen atoms.

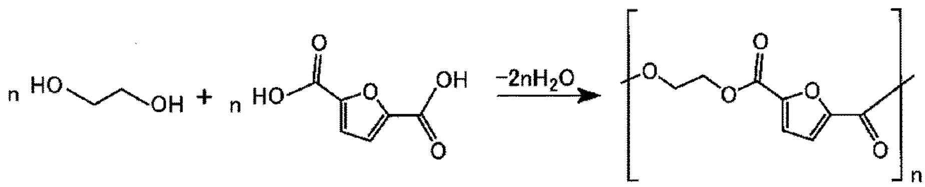


•••(2)

[In Formula (2), n is a stoichiometric coefficient, which is a number between 250 and 1,100.]

Furandicarboxylic acid (FDCA) is obtained by, for example, causing a dehydration reaction of a plant-derived fructose or glucose to obtain hydroxymethylfurfural (HMF), and oxidizing HMF.

As shown in Fig. 4, when both FDCA and ethylene glycol are derived from plants, PEF produced is PEF of which 100 mass% is derived from a plant.

When the polyester resin contains other resins, a content of the other resins is preferably less than 50 mass%, is more preferably less than 30 mass%, and is even more preferably less than 10 mass% with respect to a total mass of the polyester resin.

A number average molecular weight Mn of the polyester resin in the foam layer is 9,000 to 26,000, is preferably 15,000 to 26,000, and is more preferably 20,000 to 25,000.

When an Mn is equal to or more than the above lower limit value, the number of terminals of a polymer chain caused by generation of acetaldehyde is reduced, and thereby a fruit-like odor can be inhibited. When an Mn is equal to or less than the above upper limit value, a viscosity of the polyester resin in production steps can be reduced, and thereby shear heat generation can be inhibited and a fruit-like odor can be inhibited.

An Mn is obtained by the following expression (a) from a molecular weight that is a value obtained by converting a value measured by gel permeation chromatography (GPC) based on a calibration curve obtained using "STANDARD SM-105" and "STANDARD SH-75" (product names) manufactured by Showa Denko K.K. as standard samples.

$$Mn = \frac{\sum (M_i \cdot N_i)}{\sum N_i} = \frac{\sum C_i}{\sum (C_i / M_i)} \qquad (a)$$

Ni is the number of polymer molecules, Mi is a molecular weight, and Ci is a concentration of a sample. A concentration of the sample is represented by Ci = Mi × Ni.

A Z-average molecular weight Mz of the polyester resin in the foam layer is 240,000 to 710,000, is preferably 270,000 to 710,00, and is more preferably 300,000 to 650,000.

When an Mz is equal to or more than the above lower limit value, the number of terminals of a polymer chain caused by generation of acetaldehyde is reduced, and thereby a fruit-like odor can be inhibited. When an Mz is equal to or less than the above upper limit value, a viscosity of the polyester resin in production steps can be reduced, and thereby shear heat generation can be inhibited and a fruit-like odor can be inhibited.

An Mz is calculated from a molecular weight obtained in the same manner as Mn by the following expression (c).

$$Mz = \frac{\sum (M_i^3 \cdot N_i)}{\sum (M_i^2 \cdot N_i)} = \frac{\sum (C_i \cdot M_i^2)}{\sum (C_i \cdot M_i)} \quad (c)$$

Ni is the number of polymer molecules, Mi is a molecular weight, and Ci is a concentration of a sample. A concentration of the sample is represented by Ci = Mi × Ni.

A ratio represented by Mz/Mn (Mz/Mn ratio) is preferably 8 to 36, is more preferably 12 to 36, and is even more preferably 15 to 30. When an Mz/Mn ratio is within the above range, a fruit-like odor can be inhibited more satisfactorily.

An amount of a gel in the polyester resin contained in the foam layer is preferably 0.5% to 12.0% by weight, is more preferably 1.5% to 11% by weight, and is even more preferably 1% to 9% by weight. When an amount of the gel is within the above range, foaming is easy, and an extruded foam sheet is easily obtained. When an amount of the gel is equal to or less than the above upper limit value, a smooth sheet can be easily obtained.

An amount of the gel can be measured by a method to be described later.

An intrinsic viscosity (IV value) of the polyester resin that is a raw material (hereinafter, also referred to as a "crude thermoplastic polyester resin" or a "crude polyester resin") is preferably 0.50 to 1.50, and is more preferably 0.80 to 1.10. When an IV value is equal to or more than the above lower limit value, foaming is easy, and an extruded foam sheet is easily obtained. When an IV value is equal to or less than the above upper limit value, a smooth sheet can be easily obtained.

An IV value can be measured by a method of JIS K 7367-5 (2000).

The "crude thermoplastic polyester resin" does not have a crosslinked structure formed by a crosslinking agent, whereas the "thermoplastic polyester resin" has a crosslinked structure formed by a crosslinking agent.

<Foaming agent>

Examples of foaming agents include saturated aliphatic hydrocarbons such as propane, n-butane, isobutane, n-pentane, isopentane, and hexane, ethers such as dimethyl ether, freons such as methyl chloride, 1,1,1,2-tetrafluoroethane, 1,1-difluoroethane, and monochlorodifluoromethane, carbon dioxide, nitrogen, and the like, among which dimethyl ether, propane, n-butane, isobutane, carbon dioxide, and nitrogen are preferable. For these foaming agents, one kind may be used alone, or two or more kinds may be used in combination.

A content of the foaming agent is not particularly limited, but it is preferably, for example, 0.1 to 10 parts by mass with respect to 100 parts by mass of the crude polyester resin.

<Optional components>

The foam sheet of the present invention may contain other components (optional components) in addition to the polyester resin, a crystallization accelerator, and the foaming agent.

Examples of such optional components include cell adjusters, stabilizers, ultraviolet absorbers, colorants, crystallization accelerators, lubricants, crosslinking agents, surfactants, contraction inhibitors, flame retardants, deterioration inhibitors, and the like.

A total content of the polyester resin, the foaming agent, and the optional components does not exceed 100 mass%.

Examples of crosslinking agents include an acid dianhydride such as a pyromellitic anhydride, a polyfunctional epoxy compound, an oxazoline compound, an oxazine compound, and the like.

A content of the crosslinking agent is preferably, for example, 0.08 to 0.5 parts by mass with respect to 100 parts by mass of the crude polyester resin.

Examples of cell adjusters include a mixture of inorganic powders such as talc and silica. These cell adjusters increase a volume percentage of closed cells and thereby facilitate formation of the foam layer.

A content of the cell adjuster is preferably, for example, 0.2 to 5 parts by mass with respect to 100 parts by mass of the crude polyester resin.

Examples of stabilizers include a calcium-zinc heat stabilizer, a tin heat stabilizer, a lead heat stabilizer, and the like.

A content of the stabilizer is preferably, for example, 1 part by mass or less with respect to 100 parts by mass of the crude polyester resin.

Examples of ultraviolet absorbers include a cesium oxide-based ultraviolet absorber, a titanium oxide-based ultraviolet absorber, and the like.

A content of the ultraviolet absorber is preferably, for example, 1 part by mass or less with respect to 100 parts

by mass of the crude polyester resin.

Examples of antioxidants include cerium oxide, a solid solution of cerium oxide/zirconia, cerium hydroxide, carbon, carbon nanotubes, titanium oxide, fullerenes, and the like.

A content of the antioxidant is preferably, for example, 1 part by mass or less with respect to 100 parts by mass of the crude polyester resin.

Examples of colorants include titanium oxide, carbon black, titanium yellow, iron oxide, ultramarine blue, cobalt blue, fired pigments, metallic pigments, mica, pearl pigments, zinc oxide, precipitated silica, cadmium red, and the like.

When the foam sheet of the present invention is used for a food container, it is preferable to select products registered in the Japan Hygienic Olefin And Styrene Plastics Association among the above-mentioned colorants.

A content of the colorant is preferably, for example, 2 part by mass or less with respect to 100 parts by mass of the crude polyester resin.

Examples of crystallization accelerators include silicate salts, carbon, metal oxide, and the like. Examples of silicate salts include talc that is a hydrated magnesium silicate. Examples of carbons include carbon black, carbon nanofibers, carbon nanotubes, carbon nanohorns, activated carbon, graphite, graphene, coke, mesoporous carbon, glassy carbon, hard carbon, soft carbon, and the like. Examples of carbon blacks include furnace black, acetylene black, ketjenblack, and thermal black. Examples of metal oxides include zinc oxide, titanium oxide, and the like.

A content of the crystallization accelerator is preferably, for example, 3 part by mass or less with respect to 100 parts by mass of the crude polyester resin.

For each of the above-mentioned optional components, one kind may be used alone, or two or more kinds may be used in combination.

A content of acetaldehyde in the foam layer is 25 ppm by mass or less, is preferably 20 ppm by mass or less, and is more preferably 15 ppm by mass or less. When a content of acetaldehyde is equal to or less than the above upper limit value, it is possible to inhibit generation of a fruit-like odor in the foam sheet.

A lower limit value of a content of acetaldehyde in the foam layer is substantially preferably 0.1 ppm by mass or more, is more preferably 0.5 ppm by mass or more, is even more preferably 1 ppm by mass or more, and is particularly preferably 2 ppm by mass or more. When a content of acetaldehyde is within the above range, degradation of the polyester resin in the foam layer is inhibited, and thereby it is possible to improve properties of the polyester resin such as thermomoldability, heat resistance, and mechanical strength.

A content of acetaldehyde in the foam layer can be adjusted according to a combination of an intrinsic viscosity (IV value) of the crude polyester resin that is a raw material; a temperature for attainment of a mixture containing the crude polyester resin in an extruder; a shearing force for the mixture containing the crude polyester resin in the extruder; and the like. A temperature for attainment of a mixture can be adjusted according to a melting temperature in the extruder (set temperature of an extruder cylinder), a shear heating value of the mixture, and the like. A shearing force for the mixture can be adjusted by a discharge amount (kg/h) in the extruder, a rotation speed (rpm) of an extruder screw, a discharge ratio (kg/h/rpm) in the extruder, and the like.

A content of ashes in the foam layer is preferably 5.0 mass% or less, is preferably 3.0 mass% or less, and is more preferably 2.0 mass% or less. When a content of ashes is equal to or less than the above upper limit value, degradation of the polyester resin due to shearing in the extruder is further inhibited, a content of acetaldehyde in the foam layer is further reduced, and generation of a fruit-like odor in the foam sheet can be inhibited more satisfactorily.

A lower limit value of a content of ashes in the foam layer is substantially 0.1 mass% or more.

A content of ashes in the foam layer can be adjusted according to an amount of an inorganic additive such as a cell adjuster.

A content of heavy metals in the foam layer is preferably 1,000 ppm by mass or less, is more preferably 700 ppm by mass, and is even more preferably 500 ppm by mass. When a content of heavy metals is equal to or less than the above upper limit value, degradation of the polyester resin in the extruder is further inhibited, a content of acetaldehyde in the foam layer is further reduced, and generation of a fruit-like odor in the foam sheet can be inhibited more satisfactorily.

A lower limit value of a content of heavy metals in the foam layer is substantially 1 ppm by mass or more.

A content of heavy metals in the foam layer can be adjusted according to a combination of an amount of a catalyst when polymerizing the polyester resin, the type and an amount of optional components, and the like.

A heavy metal contained in the foam layer is derived from a catalyst for polymerizing the crude polyester resin. Accordingly, examples of heavy metals include titanium, germanium, and antimony.

[Non-foam layer]

The foam sheet may have the non-foam layer on one surface or both surfaces of the foam layer.

A resin constituting the non-foam layer is not particularly limited, and examples thereof include the same resins as the resins constituting the foam layer.

A resin constituting the non-foam layer may be the same as or different from a resin constituting the foam layer.

A thickness of the non-foam layer is determined in consideration of usage applications and the like of the foam sheet, and for example, it is preferably 10 to 300 μm and is more preferably 20 to 200 μm. When a thickness of the non-foam layer is equal to or more than the above lower limit value, the strength of the foam sheet can be further improved. When a thickness of the non-foam layer is equal to or less than the above upper limit value, a weight of the foam sheet can be reduced.

A content of acetaldehyde in the non-foam layer is the same level as the content of acetaldehyde in the foam layer. A content of acetaldehyde in the non-foam layer and a content of acetaldehyde in the non-foam layer may be the same as or different from each other.

A content of ashes in the non-foam layer is the same level as the content of ashes in the foam layer. A content of ashes in the non-foam layer and a content of ashes in the non-foam layer may be the same as or different from each other.

A content of heavy metals in the non-foam layer is the same level as the content of heavy metals in the foam layer. A content of heavy metals in the non-foam layer and a content of heavy metals in the non-foam layer may be the same as or different from each other.

(Method for producing foam sheet)

A method for producing the foam sheet includes a step of melting a crude polyester resin and kneading the melted crude polyester resin and a foaming agent to obtain a kneaded product; and a step of extruding and foaming the kneaded product to obtain a foam layer. As steps of obtaining the kneaded product, the following two steps can be mentioned.

Step (1): a step of adding a crosslinking agent into a crude thermoplastic polyester resin, thereafter, adding a foaming agent thereinto, and kneading the mixture to obtain a kneaded product.

Step (2): a step of kneading a mixture containing a crude thermoplastic polyester resin, a foaming agent, and a crosslinking agent to obtain a kneaded product.

Among the two steps, Step (1) is preferable also from the viewpoint of improving foam multiplicity.

Step (1) may be carried out as follows: a crosslinking agent is added into a crude thermoplastic polyester resin, the mixture is heated and crosslinked to obtain a thermoplastic polyester resin, thereafter, a foaming agent is added into the thermoplastic polyester resin, and the mixture is kneaded to obtain a kneaded product.

As such a method for producing the foam sheet, preferably, it is possible to adopt a known method for producing a foam sheet, and examples thereof include the following production method.

A raw material composition containing a crude polyester resin and other components, and a foaming agent are supplied to an extruder, melted, and kneaded, and thereby a mixture is obtained. Examples of other components include a crosslinking agent. A temperature at which the crude polyester resin is melted (melting temperature: set temperature) is, for example, preferably 220°C to 300°C, and is more preferably 240°C to 290°C.

When a melting temperature is equal to or higher than the above lower limit value, the crude polyester resin and other raw materials can be uniformly mixed. When a melting temperature is equal to or lower than the above upper limit value, degradation of the crude polyester resin is further inhibited, and a content of acetaldehyde in the foam layer is further reduced.

A temperature of the mixture (temperature for attainment) is preferably 280°C to 330°C and is more preferably 290°C to 320°C. When a temperature for attainment is equal to or higher than the above lower limit value, it is easy for the mixture to flow, and thereby the mixture can be more smoothly extruded from the extruder. When a temperature for attainment is equal to or lower than the above upper limit value, degradation of the polyester resin is further inhibited, and a content of acetaldehyde in the foam layer is further reduced.

A temperature of the mixture (temperature for attainment) is likely to become higher than a temperature at which the resin melts (melting temperature: set temperature) due to heat generated by shearing the resin in the extruder.

Subsequently, while kneading the mixture with a screw in the extruder, the mixture is extruded from a circular die attached to a distal end of the extruder and foamed. Thereby, a cylindrical foam product is obtained.

A diameter of this cylindrical foam product is expanded, and the foam product is supplied to a mandrel for cooling. The cooled cylindrical foam product is continuously cut in an extrusion direction, and the cut product is spread to obtain a foam sheet.

A discharge amount of the mixture from the extruder (sometimes simply referred to as a "discharge amount") is not particularly limited, and it is determined in consideration of a capacity of the extruder, and the like.

When increasing a discharge ratio (kg/h/rpm) represented by [discharge amount (kg/h)]/[rotation speed (rpm) of screw in extruder] as an operating condition for the extruder, a shearing force applied to the polyester resin is reduced, and thereby a content of acetaldehyde in the foam layer can be further reduced.

(Thermoplastic polyester resin foam container)

The thermoplastic polyester resin foam container (foam container) of the present invention is a molded product obtained by molding the above-described foam sheet of the present invention. Fig. 5 is a perspective view showing an example of a container 2 that is a molded product of the foam sheet. The foam sheet may be a laminate foam sheet, and molding is preferably performed such that a non-foam layer is provided on an inner side of the container.

A shape of the container is not particularly limited, and examples thereof include trays having a perfect circular shape, an elliptical shape, a semicircular shape, a polygonal shape, a fan shape, and the like when seen in a plan view; containers having a bowl shape; containers having a bottom with a cylindrical tubular shape or having a bottom with a square tubular shape; various containers such as containers with lids such as Nattō containers; lid bodies attached to a container main body; and the like.

Examples of usage applications of these containers include food containers, heat-resistant containers, industrial trays for transportation, agricultural trays for rearing of seedling, automobile parts, and the like.

(Method for producing foam container)

A method for producing the foam container may be a method in which the above-described foam sheet of the present invention is molded to obtain a container, or may be a method in which a foam sheet is obtained by the above-described method for producing the foam sheet of the present invention, and the obtained foam sheet is molded to obtain a container.

As such a method for producing the foam container, preferably, it is possible to adopt a known method for producing a foam container, and examples thereof include the following production method.

First, the foam sheet is heated to an arbitrary temperature to soften the foam sheet (pre-heating step).

In the pre-heating step, a temperature of the foam sheet is set to, for example, 120°C to 130°C.

Next, the softened foam sheet is sandwiched between a male mold and a female mold (die) heated to an arbitrary temperature, and is molded into a desired shape. Thereafter, the male mold and the female mold are separated from each other, and a molded container is taken out. A temperature of the die at the time of molding is preferably, for example, 170°C to 200°C.

As described above, according to the foam sheet or foam container of the present invention, since an Mn and an Mz are within the specific range, and a content of acetaldehyde is within the specific range, it is possible to reduce a peculiar fruit-like odor.

[Examples]

(Raw material used)

• Crude polyester resin: crude polyester resins shown in Tables 1 and 3 were obtained according to Production Example 1.

[Production Example 1] Production of crude polyester resin

Polyethylene terephthalate used in Example 1 was prepared. An "amount of pure gold or pure silver in catalyst" in the table is an amount of metals contained in a catalyst.

66 parts by mass of bis(hydroxyethyl) terephthalate (reagent, manufactured by Aldrich) was dissolved in a nitrogen atmosphere at 250°C. A slurry of 43.2 parts by mass of high-purity terephthalic acid and 18.6 parts by mass of ethylene glycol was added thereinto over 2.5 hours to carry out an esterification reaction.

After the esterification reaction, 0.01 part by mass of trimethyl phosphate was added, and the mixture was stirred for 5 minutes. 0.05 parts by mass of magnesium acetate, and a catalyst of the type and an amount shown in the table were added into the mixture, and the mixture was stirred for 5 minutes. Symbols representing the types of catalysts in the table are as described below. A catalyst "Ti" was added as a chelated titanium citrate compound produced in [Production Example 2].

0.013 parts by mass (equivalent to 0.75 mole/1,000 kg) of dipotassium hydrogen phosphate was added thereinto. A temperature was raised to 290°C. Thereafter, a pressure was gradually reduced to carry out a polycondensation reaction at 133 Pa or less. Thereby, a crude polyethylene terephthalate (crude PET) was obtained.

After drying the crude PET at 133 Pa or less and 160°C for 4 hours, a solid-phase polymerization reaction was carried out under conditions of 220°C for 24 hours and 133 Pa or less. Thereby, a crude polyester resin that was polyethylene terephthalate (PET) having an intrinsic viscosity (IV value) shown in the table was obtained. A number average molecular weight Mn and a Z-average molecular weight Mz were adjusted by adding a catalyst of the type and

an amount shown in the table. Thereby, a crude polyester resin that was PET having an intrinsic viscosity (IV value) shown in the table was obtained. The obtained crude polyester resin was a resin (petroleum-derived resin) made of a raw material of which 100 mass% is derived from petrochemicals.

Symbols representing the types of catalysts in the table are as follows.

- Ti: chelated titanium citrate compound produced in Production Example 2.
- Sb: antimony trioxide (content of antimony: about 100 mass%).
- Ge: germanium dioxide (content of germanium: about 100 mass%).

[Production Example 2] Production of chelated titanium citrate compound

532 g (2.52 mole) of citric acid/monohydrate was dissolved in 371 g of water in a 3-L flask equipped with a stirrer, a condenser, and a thermometer to prepare an aqueous solution of citric acid. While stirring the aqueous solution of citric acid, 288 g (1.00 mole) of titanium tetraisopropoxide was gradually added into the aqueous solution of citric acid with a dropping funnel to prepare a mixed solution. The mixed solution was refluxed for 1 hour. A mixed solution of isopropanol and water was added into the refluxed mixed solution, and the mixture was distilled under reduced pressure. The obtained distilled product was cooled to 70°C or lower. An aqueous solution having 32 mass% of 380 g (3.04 mole) of sodium hydroxide was gradually added thereinto with a dropping funnel. After filtering the obtained product, the filtrate and 504 g (80 mole) of ethylene glycol were mixed. This mixture was heated under reduced pressure to remove isopropanol and water. Thereby, a chelated titanium citrate compound (content of titanium: 3.85 mass%) was obtained as a catalyst.

(Example 1)

100 parts by mass of the crude polyester resin obtained in Production Example 1, and a certain amount of a cell adjuster (talc) shown in the table were dried at 130°C for 4 hours. The dried raw material, a certain amount of a crosslinking agent (pyromellitic anhydride, manufactured by Daicel) shown in the table were put into an extruder with φ90 mm. A nitrogen gas was press-fitted into the extruder, and the mixture was kneaded. Under conditions in which a temperature at which the crude polyester resin is melted (melting temperature: set temperature) was 285°C, and a discharge ratio was 3.2 kg/h/rpm, the mixture was extruded from a circular die having a diameter of φ135 mm. The mixture was cut while being cooled by a mandrel. Thereby, a single-layer foam sheet was obtained. Regarding the obtained foam sheet, a thickness was 0.75 mm, a basis weight was 330 $g/m^2$, an apparent density was 0.44 $g/cm^3$, and a foam multiplicity was 2.27 times.

The foam sheet of each of examples was heated with a heater at 150°C for 90 seconds to set a surface temperature of the foam sheet to 125°C. Compressed air was supplied from a male mold side to closely attach the foam sheet to a female mold. Thereafter, the male mold and the female mold were closed for 6 seconds to perform vacuum compressed air molding at 180°C. Thereby, a foam container of each of the examples was obtained. The foam container was a circular container having a diameter of 15 cm and a depth of 3 cm, and had a circular bottom surface, a side surface rising from the peripheral edge of the bottom surface, and an open upper part.

The foam sheet of each of the examples and the foam container of each of the examples were evaluated for an odor, and results are shown in the table.

(Examples 2 to 11 and Comparative Examples 1 to 6)

A single-layer foam sheet was obtained in the same manner as in Example 1 except that formulations shown in Tables 1 and 3 were used.

The foam sheet of each of the examples and the foam container of each of the examples were evaluated for an odor, and results are shown in the table.

(Example 12)

Examples 12 to 16 are examples including a plant-derived crude polyester resin (plant-derived resin). The plant-derived resin includes a resin in which a part of monomer is "derived from a plant raw material."

A foam sheet was obtained in the same manner as in Example 1 except that 100 parts by mass of a crude polyester resin of which 30 mass% was derived from a plant (CB-602AB, intrinsic viscosity = 0.77 dl/g, manufactured by Far Eastern New Century Corporation) was used instead of 100 parts by mass of the crude polyester resin. Regarding the obtained foam sheet, a thickness was 0.75 mm, a basis weight was 330 $g/m^2$, an apparent density was 0.44 $g/cm^3$, and a foam multiplicity was 2.27 times.

A foam container was obtained in the same manner as in Example 1 by using the obtained foam sheet. The obtained foam sheet and foam container were evaluated for an odor, and results are shown in Table 2.

(Example 13)

A foam sheet was obtained in the same manner as in Example 1 except that 100 parts by mass of a crude polyester resin of which 30 mass% was derived from a plant (BCB-60, intrinsic viscosity = 0.80 dl/g, manufactured by Toyota Tsusho Corporation (GLOBIO)) was used instead of 100 parts by mass of the crude polyester resin. Regarding the obtained foam sheet, a thickness was 0.75 mm, a basis weight was 330 $g/m^2$, an apparent density was 0.44 $g/cm^3$, and a foam multiplicity was 2.27 times.
A foam container was obtained in the same manner as in Example 1 by using the obtained foam sheet. The obtained foam sheet and foam container were evaluated for an odor, and results are shown in Table 2.

(Example 14)

A foam sheet was obtained in the same manner as in Example 12 except that a melting temperature was set to 300°C. Regarding the obtained foam sheet, a thickness was 0.75 mm, a basis weight was 330 $g/m^2$, an apparent density was 0.44 $g/cm^3$, and a foam multiplicity was 2.27 times.
A foam container was obtained in the same manner as in Example 1 by using the obtained foam sheet. The obtained foam sheet and foam container were evaluated for an odor, and results are shown in Table 2.

(Example 15)

A foam sheet was obtained in the same manner as in Example 12 except that a discharge ratio was set to 0.5 kg/h/rpm. Regarding the obtained foam sheet, a thickness was 0.75 mm, a basis weight was 330 $g/m^2$, an apparent density was 0.44 $g/cm^3$, and a foam multiplicity was 2.27 times.
A foam container was obtained in the same manner as in Example 1 by using the obtained foam sheet. The obtained foam sheet and foam container were evaluated for an odor, and results are shown in Table 2.

(Example 16)

A foam sheet was obtained in the same manner as in Example 1 except that 30 parts by mass of a crude polyester resin of which 30 mass% was derived from a plant (CB-602AB, intrinsic viscosity = 0.77 dl/g, manufactured by Far Eastern New Century Corporation), and 70 parts by mass of the crude polyester resin of which 100 mass% was derived from petrochemicals (intrinsic viscosity = 1.06 dl/g) of Example 1 were used instead of 100 parts by mass of the crude polyester resin. Regarding the obtained foam sheet, a thickness was 0.75 mm, a basis weight was 330 $g/m^2$, an apparent density was 0.44 $g/cm^3$, and a foam multiplicity was 2.27 times.
A foam container was obtained in the same manner as in Example 1 by using the obtained foam sheet. The obtained foam sheet and foam container were evaluated for an odor, and results are shown in Table 2.

(Measurement method)

[Molecular weight of polyester resin]

5 mg of a sample was taken from a measurement target of each of the examples. 0.5 mL of hexafluoroisopropanol (HFIP) and 0.5 mL of chloroform were added into 5 mg of the sample in this order, and the mixture was lightly shaken manually. The shaken mixture was left to stand for an immersion time of 24 $\pm$ 1.0 hours. After confirming that the sample was completely dissolved, the mixture was diluted with chloroform to 10 mL and lightly shaken manually to be mixed. Thereafter, the mixture was filtered through a non-aqueous 0.45-$\mu$m chromatodisc manufactured by GL Sciences, or a non-aqueous 0.45-$\mu$m syringe filter manufactured by Shimadzu GLC Ltd. to prepare a measurement sample. Measurement was performed on the measurement sample by a chromatograph under the following measurement conditions. A molecular weight of the sample was obtained from a standard polystyrene calibration curve created in advance. Based on the obtained molecular weight, a number average molecular weight Mn and a Z-average molecular weight Mz of the sample were obtained.

<Measuring device>

· Measuring device = gel permeation chromatograph "HLC-8320GPC EcoSEC" manufactured by TOSOH CORPORATION (with built-in RI detector and UV detector).

<GPC measurement conditions>

· Column

<<Sample side>>

Guard column = TSK guardcolum HXL-H (6.0 mm × 4.0 cm) manufactured by TOSOH CORPORATION × 1 piece

Measurement column = TSKgel GMHXL (7.8 mm I.D. × 30 cm) manufactured by TOSOH CORPORATION × 2 pieces in series

<<Reference side>>

Resistance tube (inner diameter 0.1 mm × 2 m) × 2 pieces in series
Column temperature = 40°C
Mobile phase = chloroform

<<Mobile phase flow rate>>

Sample side pump = 1.0 mL/min
Reference side pump = 0.5 mL/min
Detector = UV detector (254 nm)
Injection volume = 15 μL
Measurement time = 26 minutes
Sampling pitch = 500 milliseconds

<Standard polystyrene sample for calibration curve>

Standard polystyrene samples for calibration curves respectively having a mass average molecular weight Mw of 5,620,000, 3,120,000, 1,250,000, 442,000, 131,000, 54,000, 20,000, 7,590, 3,450, and 1,320 were used from "STANDARD SM-105" and "STANDARD SH-75" (product names) manufactured by Showa Denko K.K.

The standard polystyrene for calibration curves were grouped into A (5,620,000, 1,250,000, 131,000, 20,000, 3,450) and B (3,120,000, 442,000, 54,000, 7,590, 1,320). A was weighed (2 mg, 3 mg, 4 mg, 4 mg, 4 mg) and thereafter dissolved in 30 mL of chloroform. B was weighed (3 mg, 4 mg, 4 mg, 4 mg, 4 mg) and thereafter dissolved in 30 mL of chloroform.

A standard polystyrene calibration curve was obtained by preparing a calibration curve (cubic equation) from a retention time obtained after the measurement by injecting 50 μL of each of the prepared A and B solutions. A number average molecular weight Mn and a Z-average molecular weight Mz were calculated using this calibration curve.

[Method of measuring intrinsic viscosity (IV value)]

An IV value was measured at 30°C in phenol/tetrachloroethane (50/50 mass ratio) according to a method of JIS K 7367-5 (2000).

[Method of measuring acetaldehyde]

<Sample preparation>

1 g of a section was cut out from a measurement target of each of the examples. The cut section was ground with the following grinding machine under the following grinding conditions to prepare a sample.

<<Grinding machine>>

- Freezing and grinding machine: 6870 Freezer Mill manufactured by Seishin Trading Co., Ltd.
- Grinding container: contents 12 mL, made of stainless steel

<<Grinding conditions>>

- Liquid nitrogen pre-cooling time: 3 minutes
- Shaking and grinding time: 1 minute
- Recooling time: 1 minute
- Number of operations repeated: 5 times

<Pretreatment: methanol extraction method>

0.4 g of the ground sample and 5 mL of methanol were put in a centrifuge tube, and ultrasonic waves were applied for 15 minutes. This tube was centrifuged at 3,500 rpm for 15 minutes. The supernatant was filtered through a non-aqueous 0.2-μm chromatodisc.

2 mL of the filtrate and 40 μL of a 20 vol% phosphoric acid-methanol solution were mixed. 100 μL of a 0.2 mass% DNPH (dinitrophenylhydrazine)-acetonitrile solution (derivatizing reagent) was added into the mixed solution. This mixed solution was allowed to stand at room temperature (25°C) for 2 hours to prepare a sample for measurement.

<Measurement by ultra-high performance liquid chromatography (UHLC)>

The sample for measurement was measured by a UHLC method with the following measuring device under the following measurement conditions. A content of acetaldehyde was obtained by a calibration curve prepared separately.

<<Measuring device>>

- Device: ultra-high performance liquid chromatograph LaChromUltra of Hitachi High-Technologies Corporation
- Column: LaChromUltra C18 2 μm (2.0 mm I.D. × 50 mmL)
- Temperature of pump injection part: room temperature (25°C)
- Solvent: 0.05 mass% TFA (trifluoroacetic acid)/acetonitrile (50/50) solution
- Flow rate: 0.6 mL/min
- Execution time: 3 minutes
- Injection volume: 5 μL
- Detection condition: acetaldehyde (UV = 360 nm)

[Method of measuring ashes]

1 g of a sample was cut out from a measurement sample of each of the examples. The sample was ashed under the following ashing conditions using a microwave muffle furnace (Phoenix, manufactured by CEM). A mass of a container containing the ashes (mass of the container after ashing) was measured, and an amount of the ashes was calculated by Formula (1).

<Ashing conditions>

- Dwell time: 30 minutes
- Operating temperature: 800°C

$$\text{Amount of ashes (mass\%)} = \{(\text{mass of container after ashing}) - (\text{mass of container only})\}/\{\text{mass of sample (1.0 g)}\} \times 100 \qquad (1)$$

[Method of measuring heavy metals]

A 3-cm square sample was cut out from a measurement target of each of the examples. A mass of the sample was measured. The sample was attached to a carbon table using a carbon tape. A content of heavy metals was measured with the following measuring device under the following measurement conditions. At the time of the measurement, polyethylene terephthalate was used for a balance component, and order analysis was performed.

<Measuring device>

- Fluorescent X-ray analyzer: RIX-2100 of Rigaku Co., Ltd.
- Between X-rays: vertical Rh = 3 kw

<Measurement conditions>

- Slit width: standard
- Spectral crystals: TAP (F to Mg), PET (Al, Si), LiF (K to U), F-PC (F to Ca), SC (Ti to U)
- Measurement mode: FP thin film method (Zn-PET)
- Balance measurement: performed (PET)
- Conversion formula: recalculation was performed so that a total was 100 mass% using PET for a balance component, and mass% of a metal carrier was calculated. A value of mass% of the obtained metal was converted as mass% of a heavy metal, and converted to ppm by mass (μg/kg).

For heavy metal species, titanium, germanium, and antimony, which were used for polycondensation of polyethylene resins were used for measurement targets.

[Method of measuring amount of gel]

A sample was cut out from a measurement target of each of the examples, and about 60 mg thereof was weighed. The sample was put in a 10-mL test tube. 5 mL of hexafluoroisopanol was added thereinto. The test tube was shaken at room temperature for 24 hours to dissolve the sample. Contents of the test tube were filtered using a 200-mesh wire mesh (1) of which a weight had been measured. The wire mesh after filtration was allowed to stand for 24 hours to dry insoluble matter attached to the wire mesh. After the insoluble matter was dried, the insoluble matter on the wire mesh was washed using 1 mL of hexafluoroisopropanol. After the washing, the wire mesh to which the insoluble matter was attached was dried on a hot plate at about 80°C for 30 minutes. After the drying, the wire mesh to which the insoluble matter was attached was cooled with a desiccator. After the cooling, a weight of a wire mesh (2) to which the insoluble matter was attached was measured, and an amount of a gel was calculated by the following formula.

$$\text{Amount of gel (\% by weight)} = 100 \times \{(\text{weight of wire mesh (2) to which insoluble matter was attached}) - (\text{weight of wire mesh (1)})\}/(\text{weight of sample (60 mg)})$$

The same test was performed three times. An average value was calculated to obtain an amount of a gel in each of the examples and the comparative examples of the present application. In the table, the examples and the comparative examples in which an amount of a gel was not measured are represented by "-."

(Evaluation method)

[Odor evaluation]

<Foam sheet>

The foam sheet of each of the examples was cut out to a size of 10 cm × 10 cm. The cut out foam sheet was wrapped in aluminum foil and heated in an oven at 200°C for 10 minutes. The aluminum foil was removed immediately after heating, and 10 appointed persons scored according to the following evaluation criteria.

The scores of 10 people were averaged. Average values were rounded off to the nearest whole number and used for determination values. The average values were classified according to the following determination criteria and used for an odor evaluation.

<Foam container>

An opening on an upper surface of the foam container of each of the examples was covered with aluminum foil, and this was heated in an oven at 200°C for 10 minutes. The aluminum foil was removed immediately after heating, and 10 appointed persons scored according to the following evaluation criteria.

The scores of 10 people were averaged. Average values were rounded off to the nearest whole number and used for determination values. The average values were classified according to the following determination criteria and used for an odor evaluation.

<Evaluation criteria>

5 points: an unusual odor was not felt.
4 points: an unusual odor was slightly felt, but could not be recognized as a fruit-like odor.
3 points: a fruit-like odor was slightly felt.
2 points: a fruit-like odor was clearly felt, but was within an acceptable range.
1 point: a fruit-like odor was remarkably strongly felt.

<Determination criteria>

A: an average score was 4.5 to 5 points.
B: an average score was 2.5 to 4.4 points.
C: an average score was 1.5 to 2.4 points.
D: an average score was 1 to 1.4 points.

[Table 1]

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Specification of crude polyester resin | Type of catalyst | Ti | Sb | Ti | Ti | Ge | Ge | Ti | Ti | Ti | Ti | Ti |
| | Amount of catalyst (part by mass) | 4.4 | - | 4.4 | 4.4 | - | - | 1.55 | 0.78 | 1.29 | 1.55 | 1.55 |
| | Amount of pure gold or pure silver in catalyst (part by mass) | 0.17 | 0.9 | 0.17 | 0.17 | 0.06 | 0.04 | 0.06 | 0.03 | 0.05 | 0.06 | 0.06 |
| | Intrinsicviscosity (IV value) | 1.06 | 1.14 | 1.06 | 1.06 | 0.85 | 0.64 | 0.85 | 0.55 | 0.74 | 0.85 | 0.85 |
| Crosslinking agent | (Part by mass) | 0.15 | 0.15 | 0.15 | 0.15 | 0.2 | 0.25 | 0.3 | 0.3 | 0.25 | 0.2 | 0.15 |
| Cell adjuster | (Part by mass) | 0.7 | 0.7 | 4.0 | 6.0 | 0.7 | 0.7 | 0.7 | 0.7 | 0.7 | 0.7 | 0.7 |
| Production conditions for foam sheet | Temperature for attainment (°C) | 300 | 310 | 300 | 305 | 295 | 290 | 295 | 285 | 290 | 295 | 295 |
| | Discharge amount (kg/h) | 90 | 90 | 90 | 90 | 90 | 90 | 90 | 90 | 90 | 90 | 90 |
| | Discharge ratio (kg/h/rpm) | 3.2 | 3.2 | 3.2 | 3.2 | 3.2 | 3.2 | 3.2 | 3.2 | 3.2 | 3.2 | 3.2 |
| Foam sheet | Mn | 24000 | 25000 | 24000 | 24000 | 20000 | 11000 | 20000 | 9000 | 15000 | 20000 | 20000 |
| | Mz | 435000 | 582000 | 300000 | 250000 | 600000 | 655000 | 710000 | 650000 | 540000 | 600000 | 300000 |
| | Mz/Mn ratio | 18.1 | 23.3 | 12.5 | 10.4 | 30.0 | 59.5 | 35.5 | 72.2 | 36.0 | 30.0 | 15.0 |
| | Heavy metal (ppm by mass) | 140 | 800 | 140 | 140 | 40 | 20 | 40 | 15 | 30 | 40 | 40 |
| | Ashes (mass%) | 0.4 | 0.4 | 3.5 | 5.5 | 0.4 | 0.4 | 0.4 | 0.4 | 0.4 | 0.4 | 0.4 |
| | Acetaldehyde (ppm by mass) | 5 | 16 | 18 | 23 | 8 | 23 | 19 | 24 | 20 | 8 | 6 |
| | Amount of gel (mass%) | 3.1 | - | 2 | 0.7 | 7.1 | - | 9 | - | - | - | - |

(continued)

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Container | Mn | 24000 | 25000 | 24000 | 24000 | 20000 | 11000 | 20000 | 9000 | 15000 | 20000 | 20000 |
| | Mz | 435000 | 582000 | 300000 | 250000 | 600000 | 655000 | 710000 | 650000 | 540000 | 600000 | 300000 |
| | Mz/Mn ratio | 18.1 | 23.3 | 12.5 | 10.4 | 30.0 | 59.5 | 35.5 | 72.2 | 36 | 30 | 15 |
| | Heavy metal (ppm by mass) | 140 | 800 | 140 | 140 | 40 | 20 | 40 | 15 | 30 | 40 | 40 |
| | Ashes (mass%) | 0.4 | 0.4 | 3.5 | 5.5 | 0.4 | 0.4 | 0.4 | 0.4 | 0.4 | 0.4 | 0.4 |
| | Acetaldehyde (ppm by mass) | 4 | 15 | 17 | 22 | 6 | 21 | 18 | 22 | 18 | 6 | 5 |
| Evaluation of foam sheet | Determination value (point) | 5 | 4 | 3 | 2 | 5 | 2 | 3 | 2 | 3 | 5 | 5 |
| | Odor evaluation | A | B | B | C | A | C | B | C | B | A | A |
| Evaluation of foam container | Determination value (point) | 5 | 4 | 3 | 2 | 5 | 2 | 3 | 2 | 3 | 5 | 5 |
| | Odor evaluation | A | B | B | C | A | C | B | C | B | A | A |

[Table 2]

| | | Example 12 | Example 13 | Example 14 | Example 15 | Example 16 |
|---|---|---|---|---|---|---|
| Specification of crude polyester resin | Type of catalyst | Sb | Sb | Ti | Ti | Sb/Ti |
| | Plant-derived resin (part by mass) | 100 | 100 | 100 | 100 | 30 |
| | Petroleum-derived resin (part by mass) | - | - | - | - | 70 |
| | Intrinsic viscosity (IV value) | 0.77 | 0.88 | 0.77 | 0.77 | 0.77/1.06 |
| Crosslinking agent | (Part by mass) | 0.34 | 0.34 | 0.4 | 0.4 | 0.25 |
| Cell adjuster | (Part by mass) | 0.6 | 0.6 | 0.6 | 0.6 | 0.6 |
| Production conditions for foam sheet | Temperature for attainment (°C) | 295 | 295 | 325 | 300 | 300 |
| | Discharge amount (kg/h) | 90 | 90 | 90 | 90 | 90 |
| | Discharge (kg/h/rpm) ratio | 3.2 | 3.2 | 3.2 | 0.5 | 3.2 |
| Foam sheet | Mn | 16000 | 17000 | 16000 | 10000 | 22000 |
| | Mz | 434000 | 590000 | 560000 | 560000 | 520000 |
| | Mz/Mn ratio | 27.1 | 34.7 | 35.0 | 56.0 | 23.6 |
| | Heavy metal (ppm by mass) | 190 | 200 | 190 | 190 | 155 |
| | Ashes (mass%) | 0.3 | 0.3 | 0.3 | 0.3 | 0.3 |
| | Acetaldehyde (ppm by mass) | 3 | 6 | 16 | 21 | 6 |
| | Amount of gel (mass%) | - | - | 10 | - | - |
| Container | Mn | 16000 | 17000 | 16000 | 10000 | 22000 |
| | Mz | 430000 | 590000 | 650000 | 560000 | 520000 |
| | Mz/Mn ratio | 26.9 | 34.7 | 40.6 | 56.0 | 23.6 |
| | Heavy metal (ppm by mass) | 190 | 200 | 190 | 190 | 155 |
| | Ashes (mass%) | 0.3 | 0.3 | 0.3 | 0.3 | 0.3 |
| | Acetaldehyde (ppm by mass) | 4 | 5 | 15 | 21 | 5 |
| Evaluation of foam sheet | Determination value (point) | 5 | 5 | 4 | 2 | 5 |
| | Odor evaluation | A | A | B | C | A |
| Evaluation of foam container | Determination value (point) | 5 | 5 | 4 | 2 | 5 |
| | Odor evaluation | A | A | B | C | A |

[Table 3]

| | | Comparative Example 1 | Comparative Example 2 | Comparative Example 3 | Comparative Example 4 | Comparative Example 5 | Comparative Example 6 |
|---|---|---|---|---|---|---|---|
| Specification of crude polyester resin | Type of catalyst | Sb | Sb | Ti | Ti | Ti | Ti |
| | Amount of catalyst (part by mass) | - | - | 0.52 | 1.55 | 1.55 | 0.52 |
| | Amount of pure gold or pure silver in catalyst (part by mass) | 2.3 | 2.3 | 0.02 | 0.06 | 0.06 | 0.02 |
| | Intrinsic viscosity (IV value) | 1.2 | 1.2 | 0.5 | 0.85 | 0.85 | 0.5 |
| Crosslinking agent | (Part by mass) | 0.15 | 0.1 | 0.3 | 0.32 | 0.32 | 0.25 |
| Cell adjuster | (Part by mass) | 0.7 | 6.0 | 0.7 | 0.7 | 0.7 | 0.7 |
| Production conditions for foam sheet | Temperature for attainment (°C) | 320 | 275 | 300 | 320 | 260 | 290 |
| | Discharge amount (kg/h) | 90 | 90 | 90 | 90 | 90 | 90 |
| | Discharge ratio (kg/h/rpm) | 3.2 | 3.2 | 3.2 | 3.2 | 3.2 | 3.2 |
| Foam sheet | Mn | 27000 | 27000 | 8000 | 20000 | 20000 | 8000 |
| | Mz | 715000 | 210000 | 720000 | 720000 | 230000 | 500000 |
| | Mz/Mn ratio | 26.5 | 7.8 | 90.0 | 36.0 | 11.5 | 62.5 |
| | Heavy metal (ppm by mass) | 2000 | 2000 | 10 | 40 | 40 | 10 |
| | Ashes (mass%) | 0.4 | 5.5 | 0.4 | 0.4 | 4.5 | 0.4 |
| | Acetaldehyde (ppm by mass) | 29 | 28 | 31 | 28 | 27 | 22 |
| | Amount of gel (mass%) | 13.5 | 0.3 | - | 15.5 | - | - |

(continued)

| | | Comparative Example 1 | Comparative Example 2 | Comparative Example 3 | Comparative Example 4 | Comparative Example 5 | Comparative Example 6 |
|---|---|---|---|---|---|---|---|
| Container | Mn | 27000 | 27000 | 8000 | 20000 | 20000 | 8000 |
| | Mz | 715000 | 210000 | 720000 | 720000 | 230000 | 500000 |
| | Mz/Mn ratio | 26.5 | 7.8 | 90.0 | 36.0 | 11.5 | 62.5 |
| | Heavy metal (ppm by mass) | 2000 | 2000 | 10 | 40 | 40 | 10 |
| | Ashes (mass%) | 0.4 | 5.5 | 0.4 | 0.4 | 4.5 | 0.4 |
| | Acetaldehyde (ppm by mass) | 28 | 27 | 30 | 27 | 26 | 26 |
| Evaluation of foam sheet | Determination value (point) | 1 | 1 | 1 | 1 | 1 | 1 |
| | Odor evaluation | D | D | D | D | D | D |
| Evaluation of foam container | Determination value (point) | 1 | 1 | 1 | 1 | 1 | 1 |
| | Odor evaluation | D | D | D | D | D | D |

As shown in Tables 1 to 3, in Examples 1 to 16 to which the present invention was applied, the odor determination was "C" to "A" for both of the foam sheet and the foam container.
In the comparison between Example 12 and Example 14, it was possible to further inhibit an odor of Example 12 in which a temperature for attainment was lower.
In the comparison between Example 12 and Example 15, it was possible to further inhibit an odor of Example 12 in which a discharge ratio was larger.
In Comparative Examples 1 to 6 in which both or one of Mz and Mn was outside the range of the present invention, the odor determination was "D" for both of the foam sheet and the foam container.
Based on these results, it was confirmed that a fruit-like odor could be satisfactorily inhibited by applying the present invention.

[Industrial Applicability]

An object of the present invention is to provide a thermoplastic polyester resin foam sheet in which generation of a peculiar odor can be inhibited.

## Claims

1. A thermoplastic polyester resin foam sheet comprising:

    a foam layer containing a thermoplastic polyester resin,
    wherein a number average molecular weight Mn of the thermoplastic polyester resin contained in the foam layer is 9,000 to 26,000,
    a Z-average molecular weight Mz of the thermoplastic polyester resin contained in the foam layer is 240,000 to 710,000, and
    a content of acetaldehyde in the foam layer is 25 ppm by mass or less.

2. The thermoplastic polyester resin foam sheet according to Claim 1, wherein a ratio represented by Mz/Mn is 8.0 to 36.0.

3. The thermoplastic polyester resin foam sheet according to Claim 1 or 2, wherein a content of ashes in the foam layer is 5.0 mass% or less.

4. The thermoplastic polyester resin foam sheet according to any one of Claims 1 to 3, wherein a content of heavy metals in the foam layer is 1,000 ppm by mass or less.

5. The thermoplastic polyester resin foam sheet according to any one of Claims 1 to 4, wherein the thermoplastic polyester resin contained in the foam layer includes a plant-derived thermoplastic polyester resin.

6. The thermoplastic polyester resin foam sheet according to any one of Claims 1 to 5, wherein an amount of a gel in the thermoplastic polyester resin contained in the foam layer is 0.5% to 12.0% by weight.

7. A thermoplastic polyester resin foam container comprising:

    a foam layer containing a thermoplastic polyester resin,
    wherein a number average molecular weight Mn of the thermoplastic polyester resin contained in the foam layer is 9,000 to 26,000,
    a Z-average molecular weight Mz of the thermoplastic polyester resin contained in the foam layer is 240,000 to 710,000, and
    a content of acetaldehyde in the foam layer is 25 ppm by mass or less.

8. The thermoplastic polyester resin foam container according to Claim 7, wherein a ratio represented by Mz/Mn is 8.0 to 36.0.

9. The thermoplastic polyester resin foam container according to Claim 7 or 8, wherein a content of ashes in the foam layer is 5.0 mass% or less.

**10.** The thermoplastic polyester resin foam container according to any one of Claims 7 to 9, wherein a content of heavy metals in the foam layer is 1,000 ppm by mass or less.

**11.** The thermoplastic polyester resin foam container according to any one of Claims 7 to 10, wherein the thermoplastic polyester resin contained in the foam layer includes a plant-derived thermoplastic polyester resin.

**12.** The thermoplastic polyester resin foam container according to any one of Claims 7 to 11, wherein an amount of a gel in the thermoplastic polyester resin contained in the foam layer is 0.5% to 12.0% by weight.

**13.** The thermoplastic polyester resin foam container according to any one of Claims 7 to 12, which is a food container.

**14.** A method for producing the thermoplastic polyester resin foam sheet according to any one of Claims 1 to 6, the method comprising:

a step of kneading a crude thermoplastic polyester resin and a foaming agent to obtain a kneaded product; and
a step of extruding and foaming the kneaded product to form the foam layer.

**15.** The method for producing the thermoplastic polyester resin foam sheet according to Claim 14, wherein, in the step in which the kneaded product is obtained, the crude thermoplastic polyester resin, the foaming agent, and a crosslinking agent are kneaded to obtain the kneaded product.

**16.** A method for producing a thermoplastic polyester resin foam container, the method comprising a step of molding the thermoplastic polyester resin foam sheet according to any one of Claims 1 to 6 to obtain a container.

FIG. 1

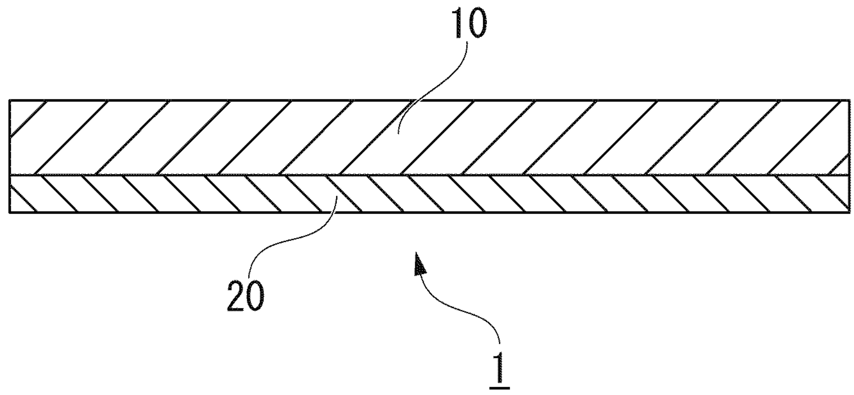

FIG. 2

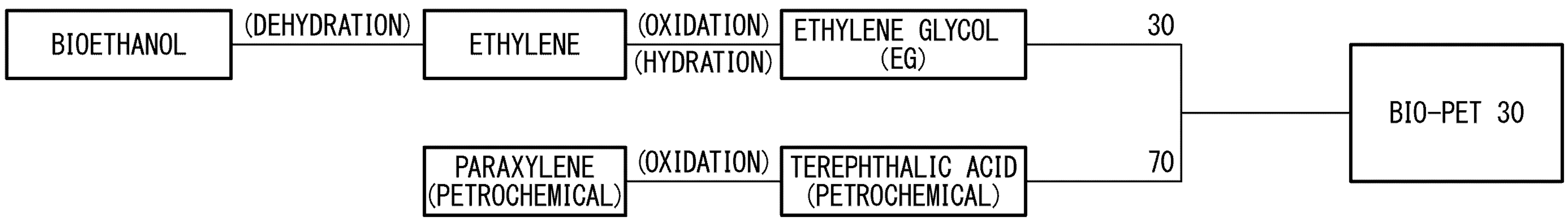
BIOETHANOL
(DEHYDRATION)
ETHYLENE
(OXIDATION)
(HYDRATION)
ETHYLENE GLYCOL (EG)
30
PARAXYLENE (PETROCHEMICAL)
(OXIDATION)
TEREPHTHALIC ACID (PETROCHEMICAL)
70
BIO-PET 30

FIG. 3

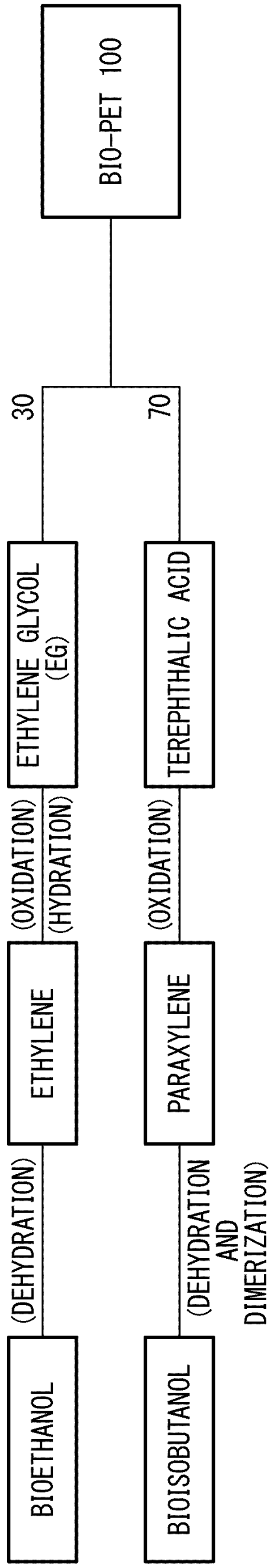
BIO-PET 100
30
70
ETHYLENE GLYCOL (EG)
TEREPHTHALIC ACID
(OXIDATION)
(HYDRATION)
(OXIDATION)
ETHYLENE
PARAXYLENE
(DEHYDRATION)
(DEHYDRATION AND DIMERIZATION)
BIOETHANOL
BIOISOBUTANOL

FIG. 4

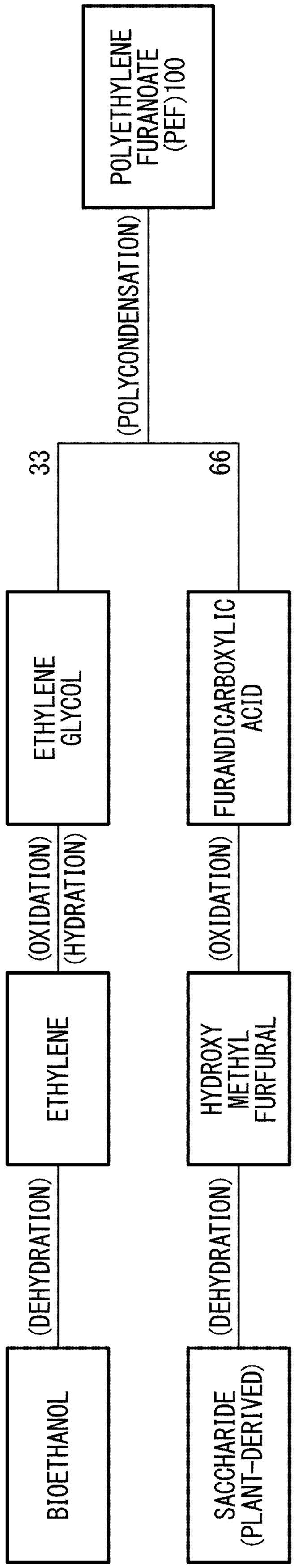
BIOETHANOL
(DEHYDRATION)
ETHYLENE
(OXIDATION)
(HYDRATION)
ETHYLENE GLYCOL
33
SACCHARIDE (PLANT-DERIVED)
(DEHYDRATION)
HYDROXY METHYL FURFURAL
(OXIDATION)
FURANDICARBOXYLIC ACID
66
(POLYCONDENSATION)
POLYETHYLENE FURANOATE (PEF) 100

FIG. 5

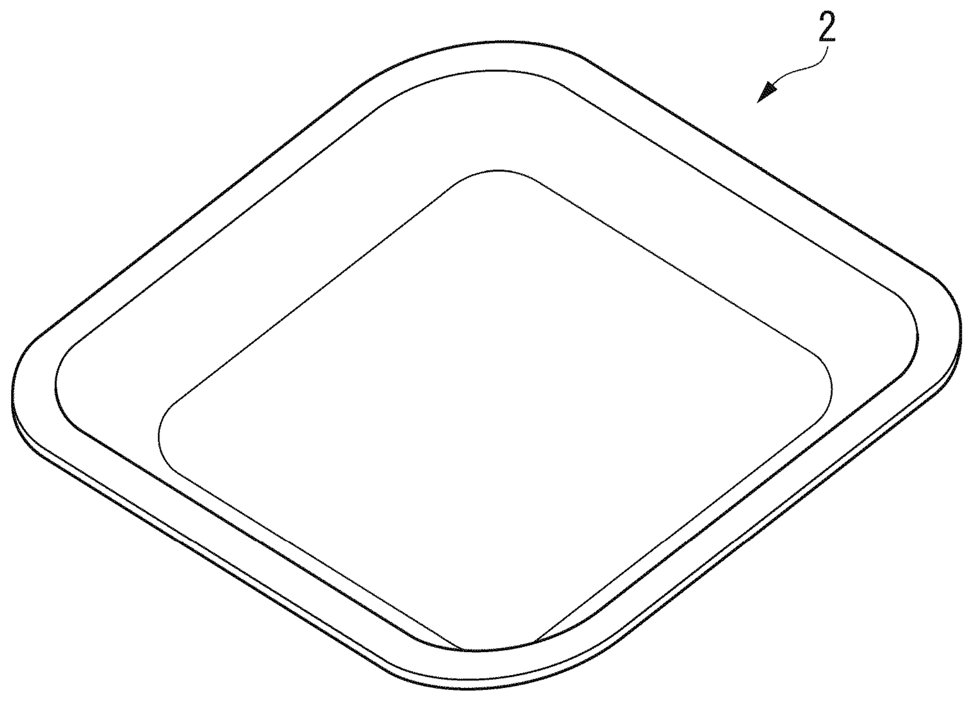

## INTERNATIONAL SEARCH REPORT

International application No. PCT/JP2019/037594

A. CLASSIFICATION OF SUBJECT MATTER
Int.Cl. C08J9/04(2006.01)i, B29C44/00(2006.01)i, B29C51/08(2006.01)i, B65D1/00(2006.01)i, C08L67/00(2006.01)i, C08L101/00(2006.01)i

According to International Patent Classification (IPC) or to both national classification and IPC

B. FIELDS SEARCHED

Minimum documentation searched (classification system followed by classification symbols)
Int.Cl. C08J9/00-9/42, B29C44/00-44/60, B29C67/20, B65D1/00-1/48

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2014-047228 A (SEKISUI PLASTICS CO., LTD.) 17 March 2014, claims, paragraphs [0020], [0023], [0031], [0033], [0035]-[0054] (Family: none) | 1-3,5-9,11-16<br>1-16 |
| Y | JP 11-32064 7 A (MITSUBISHI CHEMICAL CORP.) 24 November 1999, claims, paragraphs [0019], [0027] (Family: none) | 1-16 |
| Y | JP 09-076327 A (MITSUBISHI CHEMICAL CORP.) 25 March 1997, paragraphs [0006], [0030], [0040], [0047], [0055], [0067]-[0068] (Family: none) | 1-16 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 November 2019 (28.11.2019) | 10 December 2019 (10.12.2019) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

INTERNATIONAL SEARCH REPORT

International application No. PCT/JP2019/037594

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2013-144811 A (GRUPO PETROTEMEX, S.A. DE C.V) 25 July 2013, claims, paragraphs [0005]-[0006] & US 2006/0287472 A1, claims, paragraphs [0005]-[0006] & WO 2006/138406 A2 & EP 1891130 A2 & KR 10-2008-0019229 A & CN 101198634 A | 4,10 |
| Y | JP 2006-188690 A (SK CHEMICALS CO., LTD.) 20 July 2006, claims, paragraphs [0002], [0022] & KR 10-2006-0076826 A | 4,10 |
| Y | JP 2010-132930 A (MITSUBISHI CHEMICAL CORP.) 17 June 2010, claims, paragraph [0005] & WO 2006/001475 A1 & CN 1980996 A | 4,10 |
| A | JP 2014-043528 A (SEKISUI PLASTICS CO., LTD.) 13 March 2014, claims, paragraphs [0106], [0158]-[0161], [0179]-[0181] (Family: none) | 1-16 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018182069 A
- JP 2019036356 A
- JP H02265725 A